# EUROPEAN PATENT SPECIFICATION

(11) **EP 4 304 951 B1**
(45) Date of publication and mention of the grant of the patent: **15.01.2025**
(21) Application number: 22713804.7
(22) Date of filing: 10.03.2022
(51) Int. Cl.: B65D 65/42, A47G 21/18, D21H 19/20, D21H 19/24, D21H 27/10

(54) **HOME COMPOSTABLE AND DEGRADABLE EXTRUSION COATED SUBSTRATES**
HEIMKOMPOSTIERBARE UND ABBAUBARE EXTRUSIONSBESCHICHTETE SUBSTRATE
SUBSTRATS REVÊTUS PAR EXTRUSION COMPOSTABLES ET DÉGRADABLES À DOMICILE

(30) Priority: 12.03.2021 US 202163160140 P
(43) Date of publication of application: 17.01.2024
(73) Proprietor: Danimer IPCo, LLC, Bainbridge, GA 39817 (US)
(72) Inventor: TERWILLEGAR, Arne Matthew, Watkinsville, GA 30677 (US); DURIE, Karson, Athens, GA 30605 (US); MOORE, John, Gainesville, GA 30506 (US); GRUBBS III, Joe B., Bishop, GA 30621 (US)
(74) Representative: Boult Wade Tennant LLP
(86) International application number: PCT/US2022/019672
(87) International publication number: WO 2022/192486

(56) References cited:
- WO-A1-2010/037906
- WO-A1-2017/091392
- WO-A1-2021/211715
- US-A1- 2016 010 281

## Description

### FIELD

This disclosure relates to compostable polymeric compositions. More particularly, this disclosure relates to home compostable and/or marine degradable substrates having a compostable extrusion coating.

### BACKGROUND

WO 2021/211715 A1 relates to airlaid substrates having at least one bicomponent fiber. US 2016/010281 A1 relates to a process for coating paper, wherein the coating material used is a biodegradable, aliphatic-aromatic polyester. WO 2010/037906 A1 relates to fibrous products having barrier layers. WO 2017/091392 A1 relates to a biopolymer coating structure including an inorganic component and having improved extrusion processing characteristics.

For the sake of convenience, consumers frequently use disposable food service items, such as plates, bowls, cups, takeout containers, straws and other eating or drinking utensils. Disposable food service items are particularly convenient for serving food at large gatherings of people and at outdoor dining events.

Disposable food service items may readily be fabricated from substrates such as paperboard which decompose relatively quickly when composted. However, a simple, uncoated paperboard substrate generally performs poorly as a food service item because the paperboard will rapidly soak up water and/or grease, which ultimately compromises the strength of the paperboard. As a result, food service items made from paperboard are typically coated with a thin polymer layer to improve water and grease resistance.

Coating made from polymers such as polyethylene (PE), polypropylene (PP), or polyethylene terephthalate (PET) may significantly improve the resistance of the paperboard to water and/or grease absorption; however, such polymers do not readily degrade or when composted.

It would be desirable to provide a new coating for food service items which is fully home compostable, especially if this compostable coating provided good water and grease resistance - i.e., water and grease resistance comparable to that provided by conventional, non-compostable coatings.

### SUMMARY OF THE INVENTION

The above and other needs are met by a home compostable extrusion coated substrate according to the present disclosure.

In a first aspect, the present disclosure provides a home compostable and/or marine degradable extrusion coated substrate. This extrusion coated substrate includes a paperboard substrate having at least a first side. The extrusion coated substate also includes a layer of an extrusion coating applied over at least a portion of the first side. This extrusion coating is made up of from about 30 to about 99.5 weight percent of at least one poly(hydroxyalkanoate), and from about 5 weight percent to about 69.5 weight percent of at least one compostable polymer which is selected from the group consisting of poly(lactic acid), poly(caprolactone), poly(ethylene sebacate), poly(butylene succinate), poly(butylene succinate-co-adipate), poly(butylene adipate terephthalate) and mixtures thereof;
wherein the extrusion coating further comprises from about 0.05 weight percent to about 10*%* of at least one rheology modifier selected from the group consisting of vinyl acetate homopolymers or copolymers, peroxides, epoxides, isocyanates, carbodiimides, and mixtures thereof;
wherein the extrusion coated substrate is home compostable as determined by ASTM D6868, and/or the extrusion coated substrate is marine degradable as determined by ASTM D6691-17.

According to certain embodiment, the extrusion coating is preferably made up of from about 50 to about 69.5 weight percent of the at least one poly(hydroxyalkanoate).

Further, according to some embodiments, the at least one poly(hydroxyalkanoate) preferably includes poly-3-hydroxybutyrate-co-3-hydroxyhexanoate ("P(3HB-co-3HHx)"). More particularly, in certain embodiments, the P(3HB-co-3HHx) is preferably made up of from about 75 to about 99 mole percent hydroxybutyrate and from about 1 to about 25 mole percent hydroxyhexanoate. More preferably, the P(3HB-co-3HHx) preferably is made up of from about 93 to about 98 mole percent hydroxybutyrate and from about 2 to about 7 mole percent hydroxyhexanoate.

In other embodiments, the extrusion coating is preferably made up of from about 1 to about 25 weight percent of at least one polyhydroxyalkanoate comprising from about 25 to about 50 mole percent of hydroxyvalerate, hydroxyhexanoate, hydroxyoctanoate, and/or hydroxydecanoate.

Further, in some instances, the at least one poly(hydroxyalkanoate) is preferably a terpolymer made up from about 75 to about 99.9 mole percent monomer residues of 3-hydroxybutyrate, from about 0.1 to about 25 mole percent monomer residues of 3-hydroxyhexanoate, and from about 0.1 to about 25 mole percent monomer residues of a third 3-hydoxyalkanoate having from 5 to 12 carbon atoms.

In certain embodiments, the at least one poly(hydroxyalkanoate) preferably has a weight average molecular weight from about 50,000 Daltons to about 2.5 million Daltons, as determined by ASTM D5296-05. More preferably, the at least one poly(hydroxyalkanoate) has a weight average molecular weight from about 500,000 Daltons to about 750,000 Daltons, as determined by ASTM D5296-05.

In addition to the poly(hydroxyalkanoate), the extrusion coating may in some instances include an additional compostable polymer. In some embodiments, the extrusion coating preferably includes from about 30.5 weight percent to about 49.5 weight percent of at least one compostable polymer selected from the group consisting of poly(lactic acid), poly(caprolactone), poly(ethylene sebacate), poly(butylene succinate), poly(butylene succinate-co-adipate), poly(butylene adipate terephthalate), poly(vinyl acetate) and any mixtures thereof. More preferably, the compostable polymer is made up of poly(lactic acid).

The extrusion coating also includes minor amounts of various additives as well. For instance, the extrusion coating also includes from about 0.05 weight percent to about 10*%* of at least one rheology modifier selected from the group consisting of vinyl acetate homopolymers or copolymers, peroxides, epoxides, isocyanates, carbodiimides, and mixtures thereof.

According to certain embodiments, it is also preferred that the extrusion coating includes from about 0.1 weight percent to about 10 weight percent of at least one nucleating agent from the group consisting of pentaerythritol, boron nitride, poly(hydroxybutyrate), inositol, clays, dipentaerythritol, sorbitol, and mixtures thereof.

In some embodiments, the extrusion coating preferably includes from about 1 weight percent to about 15 weight percent of at least one filler selected from the group consisting of aragonite, clays, calcium carbonate, cellulose, nano-cellulose, talc, kaolinite, montmorillonite, bentonite, silica, chitin, starches, diatomaceous earth, titanium dioxide, nano clay, mica, and mixtures thereof.

In some embodiments, the extrusion coating also includes from about 0.1 weight percent to about 50 weight percent of at least one compostable impact modifier which is the polycondensation reaction product of: (1) a glycol selected from the group consisting of 2-(hydroxymethyl)-2-ethylpropane-1,3-diol (TMP), diethylene glycol, ethylene glycol, 1,6 hexanediol, 2,2 dimethyl 1,3 propanediol (NPG), 1,4 butanediol, 1,3 propanediol, 1,2 propanediol, propane-1,2,3-triol (glycerin), 2-methyl 1,3 propanediol (MPD), and cyclohexanedimethanol; with (2) a carboxylic acid selected from the group consisting of 1,6 hexanedioc acid (adipic acid), 1,12 dodecanedioc acid (DDDA), sebacic acid, azelaic acid, cyclohexanedioc acid(CHDA), 1,2 benzenedicarboxylic acid (phthalic anhydride), 1,3 benzenedicarboxylic acid (isophthalic acid), 1,3 benzene dicarboxylic acid (terephthalic acid) and 1,4 butanedioc acid (succinic acid).

In another embodiment, the impact modifier may comprise a polyester made up of at least three different type of monomer residues, which are derived from: (1) isosorbide; (2) succinic acid or anhydride; and (3) 1,3-propanediol.

According to certain embodiments, the extrusion coating preferably exhibits a melt flow rate of about 3-10 g/10 min at 190 °C/2.16 kg, as determined by ASTM D1238-13.

Preferably, the extrusion coating is applied over the substrate first side at a coating weight from about 10 to about 50 grams per square meter.

Preferably, the paperboard substrate is made up of Kraft paperboard, solid unbleached paperboard, solid bleached sulfate (SBS) paperboard, or a corrugated paperboard.

Moreover, in some instances, the extrusion coated substrate is preferably formed into a cup, a plate, straw, or a food container. The properties of extrusion coating have been found to be well-suited to such food service uses.

In some instances, the coating preferably exhibits a Cobb water absorption value, measured according to TAPPI Standard T441, of less than 30 grams per square meter. Further, the coating preferably exhibits a Kit Test grease resistance value, measured according to TAPPI Standard T559, of greater than 5. The coating also preferably exhibits a Dyne value greater than 38, measured according to ASTM D2578-04a.

The extrusion coated substrate is home compostable, as determined by ASTM D6868, and/or the extrusion coated substrate is marine degradable, as determined by ASTM D6691-17.

### DETAILED DESCRIPTION

The present disclosure first provides a home compostable and/or marine degradable extrusion coated substrate.

The substrate is typically paper or a paperboard web. Preferably the paper or paperboard for the substrate comprises Kraft paperboard, solid unbleached paperboard, solid bleached sulfate (SBS) paperboard, or a corrugated paperboard. The basis weight for the paper or paperboard substrate is typically at least 400 grams per square meter (gsm) and is more preferably from about 100 gsm to about 400 gsm. The paperboard substrate typically has a thickness from about 1 pt to about 46 pt caliper (about 0.03 mm to about 1.17 mm) and is more preferably from about 5 pt to about 20 pt caliper (about 0.17 mm to about 0.51 mm).

The paperboard substrate includes a first side and a second side. At least the first side of the substrate is coated with the extrusion coating. In some embodiments, both the first side and the second side of the substrate are coated with the extrusion coating.

The extrusion coating which is applied to the first and optionally the second side of the substrate according to the present disclosure is preferably home compostable as defined by ASTM D6868. Preferably the extrusion coating is also biodegradable as defined by ASTM standard D5988.

The extrusion coating comprises at least one poly(hydroxyalkanoate) which is compostable, as well as at least one additional compostable polymer which is selected from the group consisting of poly(lactic acid), poly(caprolactone), poly(ethylene sebicate), poly(butylene succinate), poly(butylene succinate-co-adipate), poly(butylene adipate terephthalate) and mixtures thereof.

The amount of the at least one poly(hydroxyalkanoate) in the extrusion coating is from about 30 to about 99.5 weight percent of the extrusion coating. More preferably, the extrusion coating is preferably made up of from about 50 to about 69.5 weight percent of the at least one poly(hydroxyalkanoate).

A wide range of one poly(hydroxyalkanoates) may be incorporated into the extrusion coating. In some instances, the at least one poly(hydroxyalkanoate) preferably includes poly-3-hydroxybutyrate-co-3-hydroxyhexanoate ("P(3HB-co-3HHx)"). More preferably, in certain embodiments, the P(3HB-co-3HHx) preferably comprises from about 75 to about 99 mole percent hydroxybutyrate and from about 1 to about 25 mole percent hydroxyhexanoate. Even more preferably, this P(3HB-co-3HHx) comprises of from about 93 to about 98 mole percent hydroxybutyrate and from about 2 to about 7 mole percent hydroxyhexanoate.

In other embodiments, the poly(hydroxyalkanoate) may comprise larger monomer units. Thus, in some embodiments, the extrusion coating preferably comprises from about 1 to about 25 weight percent of at least one polyhydroxyalkanoate comprising from about 25 to about 50 mole percent of hydroxyvalerate, hydroxyhexanoate, hydroxyoctanoate, and/or hydroxydecanoate.

In still other embodiments, the embodiments, the poly(hydroxyalkanoate) may comprise a terpolymer. For instance, in certain embodiments, the at least one poly(hydroxyalkanoate) is preferably a terpolymer comprising from about 75 to about 99.9 mole percent monomer residues of 3-hydroxybutyrate, from about 0.1 to about 25 mole percent monomer residues of 3-hydroxyhexanoate, and from about 0.1 to about 25 mole percent monomer residues of a third 3-hydoxyalkanoate having from 5 to 12 carbon atoms.

The weight average molecular weight of the at least one poly(hydroxyalkanoate) will preferably range from about 50,000 Daltons to about 2.5 million Daltons, as determined by ASTM D5296-05. More preferably, the at least one poly(hydroxyalkanoate) has a weight average molecular weight from about 500,000 Daltons to about 750,000 Daltons, as determined by ASTM D5296-05.

In addition to the poly(hydroxyalkanoate), the extrusion coating also comprises at least one compostable polymer which is selected from the group consisting of poly(lactic acid), poly(caprolactone), poly(ethylene sebicate), poly(butylene succinate), poly(butylene succinate-co-adipate), poly(butylene adipate terephthalate) and mixtures thereof.

The extrusion coating comprises from about 5 weight percent to about 69.5 weight percent of this additional compostable polymer. The extrusion coating may in some instances include an additional compostable polymer. In some embodiments, the extrusion coating more preferably comprises from about 30.5 weight percent to about 49.5 weight percent of the at least one compostable polymer.

The additional compostable polymer is selected from the group consisting of poly(lactic acid), poly(caprolactone), poly(ethylene sebecate), poly(butylene succinate), poly(butylene succinate-co-adipate), poly(butylene adipate terephthalate) and mixtures thereof. In certain embodiments, however, the compostable polymer more preferably comprises poly(lactic acid). In other words, the extrusion coating is a blend of poly(lactic acid) with one or more poly(hydroxyalkanoates).

The extrusion coating also includes minor amounts of various additives. The extrusion coating also comprises from about 0.05 weight percent to about 10% of at least one rheology modifier selected from the group consisting of vinyl acetate homopolymers or copolymers, peroxides, epoxides, isocyanates, carbodiimides, and mixtures thereof.

In certain embodiments, the extrusion coating also preferably comprises from about 0.1 weight percent to about 10 weight percent of at least one nucleating agent from the group consisting of pentaerythritol, boron nitride, poly(hydroxybutyrate), inositol, clays, dipentaerythritol, sorbitol, and mixtures thereof.

Moreover, the extrusion coating may also comprise from about 1 weight percent to about 15 weight percent of at least one filler selected from the group consisting of aragonite, clays, calcium carbonate, cellulose, nano-cellulose, talc, kaolinite, montmorillonite, bentonite, silica, chitin, starches, diatomaceous earth, titanium dioxide, nano clay, mica, and mixtures thereof.

In some embodiments, the extrusion coating may also comprise from about 0.1 weight percent to about 50 weight percent of at least one impact modifier. In some embodiments, the impact modifier is preferably a compostable polymer which is the polycondensation reaction product of: (1) a glycol selected from the group consisting of 2-(hydroxymethyl)-2-ethylpropane-1,3-diol (TMP), diethylene glycol, ethylene glycol, 1,6 hexanediol, 2,2 dimethyl 1,3 propanediol (NPG), 1,4 butanediol, 1,3 propanediol, 1,2 propanediol, propane-1,2,3-triol (glycerin), 2-methyl 1,3 propanediol (MPD), and cyclohexanedimethanol; with (2) a carboxylic acid selected from the group consisting of 1,6 hexanedioc acid (adipic acid), 1,12 dodecanedioc acid (DDDA), sebacic acid, azelaic acid, cyclohexanedioc acid(CHDA), 1,2 benzenedicarboxylic acid (phthalic anhydride), 1,3 benzenedicarboxylic acid (isophthalic acid), 1,3 benzene dicarboxylic acid (terephthalic acid) and 1,4 butanedioc acid (succinic acid).

The extrusion coated substrate is formed by first providing a charge of the extrusion coating polymer mixture. Typically, the components of the extrusion coating are combined beforehand and provided in the form of a pelletized resin. A charge of this polymer resin is heated in an extruder to a temperature at or above the melting point of the polymer resin. The exact temperature to which the polymer resin is heated may vary somewhat, depending upon the precise make-up of the polymer resin (the type of compostable polymer, the molecular weight of the compostable polymer, the amount of additives, etc). In general, the polymer resin is heated to a temperature from about 125 °C to about 280 °C, and more preferably heated to a temperature from about 135 °C to about 200 °C.

Once heated, the polymer resin charge is then extruded through a die and applied over a first surface of the substrate. In some instances, a substantially similar process may be used to apply a coating over the second surface of the substrate as well.

According to certain embodiments, the extrusion coating preferably exhibits a melt flow rate of about 3-10 g/10 min at 190 °C/2.16 kg, as determined by ASTM D1238-13.

Preferably, the extrusion coating is applied over the substrate first side at a coating weight from about 10 to about 50 grams per square meter.

After the extrusion coating is applied, the finished substrates according to the present disclosure may be used to form a variety of end products. The extrusion coated substrates are particularly well suited to for conversion to form food services items. For instance, the extrusion coated substrates may be formed into a cup, a plate, or a food container. In other embodiments, the extrusion coated substrates may be converted to form cartons, bottles, straws, boxes, or containers.

Again, the extrusion coated substrates according to the present disclosure are well-suited to use for food applications. In particular, the coated substrates exhibit good resistance to oil, grease and to water.

Thus, the extrusion coated substrates of the present disclosure preferably exhibit a Cobb water absorption value, measured according to TAPPI Standard T441, of less than 30 grams per square meter. Further, the extrusion coated substrates preferably exhibit a Kit Test grease resistance value, measured according to TAPPI Standard T559, of greater than 5. Moreover, the extrusion coated substrates also preferably exhibit a Dyne value greater than 38, measured according to ASTM D2578-04a.

At the same time, the extrusion coated substrates of the present disclosure are home-compostable, unlike substrates coated with conventional petroleum-based polymers. In accordance with the present disclosure, it is also preferred that the extrusion-coated substrate is home compostable, as determined by ASTM D6868, and/or that the extrusion coated substrate is marine degradable, as determined by ASTM D6691-17.

The present disclosure is also further illustrated by the following embodiments:
Embodiment 1. A home compostable and/or marine degradable extrusion coated substrate comprising:
   a paperboard substrate having a first side; and
   a layer of an extrusion coating applied over at least a portion of the first side, wherein the extrusion coating comprises
   from 30 to 99.5 weight percent of at least one poly(hydroxyalkanoate), and
   from 5 weight percent to 69.5 weight percent of at least one compostable polymer selected from the group consisting of poly(lactic acid), poly(caprolactone), poly(ethylene sebecate), poly(butylene succinate), poly(butylene succinate-co-adipate), poly(butylene adipate terephthalate) and mixtures thereof;
   wherein the extrusion coating further comprises from 0.05 weight percent to 10% of at least one rheology modifier selected from the group consisting of vinyl acetate homopolymers or copolymers, peroxides, epoxides, isocyanates, carbodiimides, and mixtures thereof;
   wherein the extrusion coated substrate is home compostable, as determined by ASTM D6868 and/or the extrusion coated substrate is marine degradable, as determined by ASTM D6691-17.
Embodiment 2. The extrusion coated substrate of Embodiment 1, wherein the extrusion coating comprises from 50 to 69.5 weight percent of the at least one poly(hydroxyalkanoate).
Embodiment 3. The extrusion coated substrate of Embodiments 1 or 2, wherein the at least one poly(hydroxyalkanoate) comprises poly-3-hydroxybutyrate-co-3-hydroxyhexanoate ("P(3HB-co-3HHx)").
Embodiment 4. The extrusion coated substrate of Embodiment 3, wherein the P(3HB-co-3HHx) comprises from 75 to 99 mole percent hydroxybutyrate and from 1 to 25 mole percent hydroxyhexanoate.
Embodiment 5. The extrusion coated substrate of Embodiment 3, wherein the P(3HB-co-3HHx) preferably comprises from 93 to 98 mole percent hydroxybutyrate and from 2 to 7 mole percent hydroxyhexanoate.
Embodiment 6. The extrusion coated substrate of any of the preceding embodiments, wherein the extrusion coating comprises from 1 to 25 weight percent of at least one polyhydroxyalkanoate comprising from 25 to 50 mole percent of hydroxyvalerate, hydroxyhexanoate, hydroxyoctanoate, and/or hydroxydecanoate.
Embodiment 7. The extrusion coated substrate of any of the preceding embodiments, wherein the at least one poly(hydroxyalkanoate) comprises a terpolymer made up from 75 to 99.9 mole percent monomer residues of 3-hydroxybutyrate, from 0.1 to 25 mole percent monomer residues of 3-hydroxyhexanoate, and from 0.1 to 25 mole percent monomer residues of a third 3-hydoxyalkanoate having from 5 to 12 carbon atoms.
Embodiment 8. The extrusion coated substrate of any of the preceding embodiments, wherein the at least one poly(hydroxyalkanoate) has a weight average molecular weight from 50,000 Daltons to 2.5 million Daltons, as determined by ASTM D5296-05.
Embodiment 9. The extrusion coated substrate of any of the preceding embodiments, wherein the at least one poly(hydroxyalkanoate) has a weight average molecular weight from 500,000 Daltons to 750,000 Daltons, as determined by ASTM D5296-05.
Embodiment 10. The extrusion coated substrate of any of the preceding embodiments, wherein the extrusion coating comprises from 30.5 weight percent to 49.5 weight percent of at least one compostable polymer selected from the group consisting of poly(lactic acid), poly(caprolactone), poly(ethylene sebecate), poly(butylene succinate), poly(butylene succinate-co-adipate), poly(butylene adipate terephthalate), poly(vinyl acetate) and any mixtures thereof.
Embodiment 11. The extrusion coated substrate of any of the preceding embodiments, wherein the at least one compostable polymer comprises poly(lactic acid).
Embodiment 13. The extrusion coated substrate of any of the preceding embodiments, wherein the extrusion coating further comprises from 0.1 weight percent to 10 weight percent of at least one nucleating agent from the group consisting of pentaerythritol, boron nitride, poly(hydroxybutyrate), inositol, clays, dipentaerythritol, sorbitol, and mixtures thereof.
Embodiment 14. The extrusion coated substrate of any of the preceding embodiments, wherein the extrusion coating further comprises from 1 weight percent to 15 weight percent of at least one filler selected from the group consisting of aragonite, clays, calcium carbonate, cellulose, nano-cellulose, talc, kaolinite, montmorillonite, bentonite, silica, chitin, starches, diatomaceous earth, titanium dioxide, nano clay, mica, and mixtures thereof.
Embodiment 15. The extrusion coated substrate of any of the preceding embodiments, wherein the extrusion coating further comprises from 0.1 weight percent to 50 weight percent of at least one impact modifier which is the polycondensation reaction product of: (1) a glycol selected from the group consisting of 2-(hydroxymethyl)-2-ethylpropane-1,3-diol (TMP), diethylene glycol, ethylene glycol, 1,6 hexanediol, 2,2 dimethyl 1,3 propanediol (NPG), 1,4 butanediol, 1,3 propanediol, 1,2 propanediol, propane-1,2,3-triol (glycerin), 2-methyl 1,3 propanediol (MPD), and cyclohexanedimethanol; with (2) a carboxylic acid selected from the group consisting of 1,6 hexanedioc acid (adipic acid), 1,12 dodecanedioc acid (DDDA), sebacic acid, azelaic acid, cyclohexanedioc acid(CHDA), 1,2 benzenedicarboxylic acid (phthalic anhydride), 1,3 benzenedicarboxylic acid (isophthalic acid), 1,3 benzene dicarboxylic acid (terephthalic acid) and 1,4 butanedioc acid (succinic acid).
Embodiment 16. The extrusion coated substrate of any of the preceding embodiments, wherein the extrusion coating exhibits a melt flow rate of 3 - 10 g/10 min at 190 °C/2.16 kg, as determined by ASTM D1238-13.
Embodiment 17. The extrusion coated substrate of any of the preceding embodiments, wherein the extrusion coating is applied over the substrate first side at a coating weight from 10 to 50 grams per square meter.
Embodiment 18. The extrusion coated substrate of any of the preceding embodiments, wherein the paperboard substrate comprises Kraft paperboard, solid unbleached paperboard, solid bleached sulfate (SBS) paperboard, or a corrugated paperboard.
Embodiment 19. The extrusion coated substrate of any of the preceding embodiments, wherein the extrusion coated substrate is formed into a cup, a plate, straw, or a food container.
Embodiment 20. The extrusion coated substrate of any of the preceding embodiments, wherein the extrusion coating exhibits a Cobb water absorption value, measured according to TAPPI Standard T441, of less than 30 grams per square meter.
Embodiment 21. The extrusion coated substrate of any of the preceding embodiments, wherein the extrusion coating exhibits a Kit Test grease resistance value, measured according to TAPPI Standard T559, of greater than 5.
Embodiment 22. The extrusion coated substrate of any of the preceding embodiments, wherein the coating exhibits a Dyne value greater than 38, measured according to ASTM D2578-04a.
Embodiment 23. The extrusion coated substrate of any of the preceding embodiments, wherein the extrusion coated substrate is home compostable, as determined by ASTM D6868.
Embodiment 24. The extrusion coated substrate of any of the preceding embodiments, wherein the extrusion coated substrate is marine degradable, as determined by ASTM D6691-17.

### EXAMPLES

The following non-limiting examples illustrate various additional aspects of the invention. Unless otherwise indicated, temperatures are in degrees Celsius and percentages are by weight based on the dry weight of the formulation.

### EXAMPLE 1

To a 40 mm extruder, a mixture of 58.9*%* 6 mol*%* PHA, 40*%* polylactic acid, 0.1*%* 2,5-Bis(tert-butylperoxy)-2,5-dimethylhexane, and 1*%* Boron Nitride was charged through a feeder into the extruder. Once melted, this mixture was extruded through a die, cut, and cooled to form a plurality of resin pellets for later coating of a substrate.

### EXAMPLE 2

To a 40 mm extruder, a mixture of 58.9*%* 6 mol*%* PHA, 40*%* polybutylene succinate co adipate (PBSA), 0.1*%* 2,5-Bis(tert-butylperoxy)-2,5-dimethylhexane, and 1*%* Boron Nitride was charged through a feeder into the extruder. Once melted, this mixture was extruded through a die, cut, and cooled to form a plurality of resin pellets for later coating of a substrate.

### EXAMPLE 3

To a 40 mm extruder, a mixture of 58.9*%* 6 mol*%* PHA, 20*%* polybutylene adipate co terephthalate (PBAT), 20*%* polylactic acid, 0.1*%* 2,5-Bis(tert-butylperoxy)-2,5-dimethylhexane, and 1*%* Boron Nitride was charged through a feeder into the extruder. Once melted, this mixture was extruded through a die, cut, and cooled to form a plurality of resin pellets for later coating of a substrate.

### EXAMPLE 4

To a 40 mm extruder, a mixture of 79.9*%* 2 mol*%* PHA, 10*%* polybutylene adipate co terephthalate (PBAT), 10*%* polylactic acid, 10*%* polycaprolactone, and 0.1*%* 2,5-Bis(tert-butylperoxy)-2,5-dimethylhexane was charged through a feeder into the extruder. Once melted, this mixture was extruded through a die, cut, and cooled to form a plurality of resin pellets for later coating of a substrate.

### EXAMPLE 5

To a 40 mm extruder, a mixture of 79.9*%* 2 mol*%* PHA, 20*%* polybutylene adipate co terephthalate (PBAT), and 0.1*%* 2,5-Bis(tert-butylperoxy)-2,5-dimethylhexane was charged through a feeder into the extruder. Once melted, this mixture was extruded through a die, cut, and cooled to form a plurality of resin pellets for later coating of a substrate.

### EXAMPLE 6

To a 40 mm extruder, a mixture of 79.9*%* 2 mol*%* PHA, 20*%* polycaprolactone and 0.1*%* 2,5-Bis(tert-butylperoxy)-2,5-dimethylhexane was charged through a feeder into the extruder. Once melted, this mixture was extruded through a die, cut, and cooled to form a plurality of resin pellets for later coating of a substrate.

### EXAMPLE 7

To a 40 mm extruder, a mixture of 58.9*%* 6 mol*%* PHA, 40*%* polylactic acid, 0.1*%* 2,5-Bis(tert-butylperoxy)-2,5-dimethylhexane, and 1*%* pentaerythritol was charged through a feeder into the extruder. Once melted, this mixture was extruded through a die, cut, and cooled to form a plurality of resin pellets for later coating of a substrate.

### EXAMPLE 8

To a 40 mm extruder, a mixture of 58.9*%* 2 mol*%* PHA, 40*%* polylactic acid, 0.1*%* 2,5-Bis(tert-butylperoxy)-2,5-dimethylhexane, and 1*%* pentaerythritol was charged through a feeder into the extruder. Once melted, this mixture was extruded through a die, cut, and cooled to form a plurality of resin pellets for later coating of a substrate.

### EXAMPLE 9

To a 40 mm extruder, a mixture of 59*%* 6 mol*%* PHA, 36*%* polylactic acid, 1*%* Boron Nitride and 4*%* polyvinyl alcohol was charged through a feeder into the extruder. Once melted, this mixture was extruded through a die, cut, and cooled to form a plurality of resin pellets for later coating of a substrate.

### EXAMPLE 10

The polymer from Example 1 was applied to light paper with a curtain coater at a coating thickness of 15 pounds/ream. The subsequent coating exhibits ease of application and good adhesion verified by 100*%* fiber tear without additional surface preparation such as flame or corona treatment(s). Furthermore, the coating exhibits a Cobb test value of 0.17 - 0.21, a Kit test value of 10+, and a Dyne value of 42-44.

### EXAMPLE 11

The polymer from Example 1 was applied to light paper with a curtain coater at a coating thickness of 12 pounds/ream. The subsequent coating exhibits ease of application and good adhesion verified by 100*%* fiber tear without additional surface preparation such as flame or corona treatment(s).

### EXAMPLE 12

The polymer from Example 1 was applied to light paper with a curtain coater at a coating thickness of 9 pounds/ream. The subsequent coating exhibits ease of application and good adhesion verified by 100*%* fiber tear without additional surface preparation such as flame or corona treatment(s).

### EXAMPLE 13

The polymer from Example 1 was applied to light paper with a curtain coater at a coating thickness of 6 pounds/ream. The subsequent coating exhibits ease of application and good adhesion verified by 100*%* fiber tear without additional surface preparation such as flame or corona treatment(s).

### EXAMPLE 14

The polymer from Example 9 was applied to light paper with a curtain coater at a coating thickness of 15 pounds/ream. The subsequent coating exhibits ease of application and good adhesion verified by 100*%* fiber tear without additional surface preparation such as flame or corona treatment(s).

### EXAMPLE 15

The polymer from Example 9 was applied to light paper with a curtain coater at a coating thickness of 12 pounds/ream. The subsequent coating exhibits ease of application and good adhesion verified by 100*%* fiber tear without additional surface preparation such as flame or corona treatment(s).

### EXAMPLE 16

The polymer from Example 9 was applied to light paper with a curtain coater at a coating thickness of 9 pounds/ream. The subsequent coating exhibits ease of application and good adhesion verified by 100*%* fiber tear without additional surface preparation such as flame or corona treatment(s).

### EXAMPLE 17

The polymer from Example 9 was applied to light paper with a curtain coater at a coating thickness of 6 pounds/ream. The subsequent coating exhibits ease of application and good adhesion verified by 100*%* fiber tear without additional surface preparation such as flame or corona treatment(s).

## Claims

1. A home compostable and/or marine degradable extrusion coated substrate comprising:
a paperboard substrate having a first side; and
a layer of an extrusion coating applied over at least a portion of the first side, wherein the extrusion coating comprises
from about 30 to about 99.5 weight percent of at least one poly(hydroxyalkanoate), and
from about 5 weight percent to about 69.5 weight percent of at least one compostable polymer selected from the group consisting of poly(lactic acid), poly(caprolactone), poly(ethylene sebecate), poly(butylene succinate), poly(butylene succinate-co-adipate), poly(butylene adipate terephthalate) and mixtures thereof;
wherein the extrusion coating further comprises from about 0.05 weight percent to about 10% of at least one rheology modifier selected from the group consisting of vinyl acetate homopolymers or copolymers, peroxides, epoxides, isocyanates, carbodiimides, and mixtures thereof;
wherein the extrusion coated substrate is home compostable as determined by ASTM D6868, and/or the extrusion coated substrate is marine degradable as determined by ASTM D6691-17.

2. The extrusion coated substrate of Claim 1, wherein the extrusion coating comprises from about 50 to about 69.5 weight percent of the at least one poly(hydroxyalkanoate).

3. The extrusion coated substrate of Claim 1, wherein the at least one poly(hydroxyalkanoate) comprises poly-3-hydroxybutyrate-co-3-hydroxyhexanoate ("P(3HB-co-3HHx)").

4. The extrusion coated substrate of Claim 3, wherein the P(3HB-co-3HHx) preferably comprises from about 93 to about 98 mole percent hydroxybutyrate and from about 2 to about 7 mole percent hydroxyhexanoate.

5. The extrusion coated substrate of Claim 1, wherein the extrusion coating comprises from about 1 to about 25 weight percent of at least one polyhydroxyalkanoate comprising from about 25 to about 50 mole percent of hydroxyvalerate, hydroxyhexanoate, hydroxyoctanoate, and/or hydroxydecanoate.

6. The extrusion coated substrate of Claim 1, wherein the at least one poly(hydroxyalkanoate) comprises a terpolymer made up from about 75 to about 99.9 mole percent monomer residues of 3-hydroxybutyrate, from about 0.1 to about 25 mole percent monomer residues of 3-hydroxyhexanoate, and from about 0.1 to about 25 mole percent monomer residues of a third 3-hydoxyalkanoate having from 5 to 12 carbon atoms.

7. The extrusion coated substrate of Claim 1, wherein the extrusion coating comprises from about 30.5 weight percent to about 49.5 weight percent of at least one compostable polymer selected from the group consisting of poly(lactic acid), poly(caprolactone), poly(ethylene sebecate), poly(butylene succinate), poly(butylene succinate-co-adipate), poly(butylene adipate terephthalate), poly(vinyl acetate) and any mixtures thereof.

8. The extrusion coated substrate of Claim 1, wherein the extrusion coating further comprises from about 0.1 weight percent to about 10 weight percent of at least one nucleating agent from the group consisting of pentaerythritol, boron nitride, poly(hydroxybutyrate), inositol, clays, dipentaerythritol, sorbitol, and mixtures thereof.

9. The extrusion coated substrate of Claim 1, wherein the extrusion coating further comprises from about 1 weight percent to about 15 weight percent of at least one filler selected from the group consisting of aragonite, clays, calcium carbonate, cellulose, nano-cellulose, talc, kaolinite, montmorillonite, bentonite, silica, chitin, starches, diatomaceous earth, titanium dioxide, nano clay, mica, and mixtures thereof.

10. The extrusion coated substrate of Claim 1, wherein the extrusion coating further comprises from about 0.1 weight percent to about 50 weight percent of at least one impact modifier which is the polycondensation reaction product of: (1) a glycol selected from the group consisting of 2-(hydroxymethyl)-2-ethylpropane-1,3-diol (TMP), diethylene glycol, ethylene glycol, 1,6 hexanediol, 2,2 dimethyl 1,3 propanediol (NPG), 1,4 butanediol, 1,3 propanediol, 1,2 propanediol, propane-1,2,3-triol (glycerin), 2-methyl 1,3 propanediol (MPD), and cyclohexanedimethanol; with (2) a carboxylic acid selected from the group consisting of 1,6 hexanedioc acid (adipic acid), 1,12 dodecanedioc acid (DDDA), sebacic acid, azelaic acid, cyclohexanedioc acid(CHDA), 1,2 benzenedicarboxylic acid (phthalic anhydride), 1,3 benzenedicarboxylic acid (isophthalic acid), 1,3 benzene dicarboxylic acid (terephthalic acid) and 1,4 butanedioc acid (succinic acid).

11. The extrusion coated substrate of Claim 1, wherein the extrusion coating exhibits a melt flow rate of about 3 - 10 g/10 min at 190 °C/2.16 kg, as determined by ASTM D1238-13.

12. The extrusion coated substrate of Claim 1, wherein the extrusion coated substrate is formed into a cup, a plate, straw, or a food container.

13. The extrusion coated substrate of Claim 1, wherein the extrusion coating exhibits a Cobb water absorption value, measured according to TAPPI Standard T441, of less than 30 grams per square meter.

14. The extrusion coated substrate of Claim 1, wherein the extrusion coating exhibits a Kit Test grease resistance value, measured according to TAPPI Standard T559, of greater than 5.

15. The extrusion coated substrate of Claim 1, wherein the coating exhibits a Dyne value greater than 38, measured according to ASTM D2578-04a.

## Patentansprüche

1. Heimkompostierbares und/oder marin abbaubares, extrusionsbeschichtetes Substrat, umfassend:
ein Pappsubstrat mit einer ersten Seite; und
eine Schicht einer Extrusionsbeschichtung, die über mindestens einen Teil der ersten Seite aufgebracht ist, wobei die Extrusionsbeschichtung umfasst:
etwa 30 bis etwa 99,5 Gew.-% mindestens eines Poly(hydroxyalkanoats), und
etwa 5 Gew.-% bis etwa 69,5 Gew.-% mindestens eines kompostierbaren Polymers, ausgewählt aus der Gruppe, bestehend aus Poly(milchsäure), Poly(caprolacton), Poly(ethylensabecat), Poly(butylensuccinat), Poly(butylensuccinat-co-adipat), Poly(butylenadipat-terephthalat) und Mischungen davon,
wobei die Extrusionsbeschichtung ferner etwa 0,05 Gew.-% bis etwa 10 Gew.-% mindestens eines Rheologiemodifikators umfasst, ausgewählt aus der Gruppe bestehend aus Vinylacetat-Homopolymeren oder -Copolymeren, Peroxiden, Epoxiden, Isocyanaten, Carbodiimiden und Mischungen davon;
wobei das extrusionsbeschichtete Substrat gemäß ASTM D6868 heimkompostierbar ist und/oder das extrusionsbeschichtete Substrat gemäß ASTM D6691-17 marin abbaubar ist.

2. Extrusionsbeschichtetes Substrat nach Anspruch 1, wobei die Extrusionsbeschichtung etwa 50 bis etwa 69,5 Gew.-% des mindestens einen Poly(hydroxyalkanoats) umfasst.

3. Extrusionsbeschichtetes Substrat nach Anspruch 1, wobei das mindestens eine Poly(hydroxyalkanoat) Poly-3-hydroxybutyrat-co-3-hydroxyhexanoat ("P(3HB-co-3HHx)") umfasst.

4. Extrusionsbeschichtetes Substrat nach Anspruch 3, wobei das P(3HB-co-3HHx) vorzugsweise etwa 93 bis etwa 98 Mol-% Hydroxybutyrat und etwa 2 bis etwa 7 Mol-% Hydroxyhexanoat umfasst.

5. Extrusionsbeschichtetes Substrat nach Anspruch 1, wobei die Extrusionsbeschichtung etwa 1 bis etwa 25 Gew.-% mindestens eines Polyhydroxyalkanoats umfasst, das etwa 25 bis etwa 50 Mol-% Hydroxyvalerat, Hydroxyhexanoat, Hydroxyoctanoat und/oder Hydroxydecanoat umfasst.

6. Extrusionsbeschichtetes Substrat nach Anspruch 1, wobei das mindestens eine Poly(hydroxyalkanoat) ein Terpolymer umfasst, das zu etwa 75 bis etwa 99,9 Mol-% aus Monomerresten von 3-Hydroxybutyrat, zu etwa 0,1 bis etwa 25 Mol-% aus Monomerresten von 3-Hydroxyhexanoat und zu etwa 0,1 bis etwa 25 Mol-% aus Monomerresten eines dritten 3-Hydoxyalkanoats mit 5 bis 12 Kohlenstoffatomen besteht.

7. Extrusionsbeschichtetes Substrat nach Anspruch 1, wobei die Extrusionsbeschichtung etwa 30,5 Gew.-% bis etwa 49,5 Gew.-% mindestens eines kompostierbaren Polymers umfasst, das aus der Gruppe ausgewählt ist, die aus Poly(milchsäure), Poly(caprolacton), Poly(ethylensabecat), Poly(butylensuccinat), Poly(butylensuccinat-co-adipat), Poly(butylenadipat-terephthalat), Poly(vinylacetat) und beliebigen Mischungen davon besteht.

8. Extrusionsbeschichtetes Substrat nach Anspruch 1, wobei die Extrusionsbeschichtung ferner etwa 0,1 Gew.-% bis etwa 10 Gew.-% mindestens eines Keimbildners umfasst, der aus der Gruppe ausgewählt ist, die aus Pentaerythrit, Bornitrid, Poly(hydroxybutyrat), Inosit, Tonen, Dipentaerythrit, Sorbit und Mischungen davon besteht.

9. Extrusionsbeschichtetes Substrat nach Anspruch 1, wobei die Extrusionsbeschichtung ferner etwa 1 Gew.-% bis etwa 15 Gew.-% mindestens eines Füllstoffs umfasst, der aus der Gruppe ausgewählt ist, die aus Aragonit, Tonen, Calciumcarbonat, Cellulose, Nano-Cellulose, Talk, Kaolinit, Montmorillonit, Bentonit, Siliciumdioxid, Chitin, Stärken, Diatomeenerde, Titandioxid, Nano-Ton, Glimmer und Mischungen davon besteht.

10. Extrusionsbeschichtetes Substrat nach Anspruch 1, wobei die Extrusionsbeschichtung ferner etwa 0,1 Gew.-% bis etwa 50 Gew.-% mindestens eines Schlagzähigkeitsmodifikators umfasst, der das Polykondensationsreaktionsprodukt von (1) einem Glykol, ausgewählt aus der Gruppe bestehend aus 2-(Hydroxymethyl)-2-ethylpropan-1,3-diol (TMP), Diethylenglykol, Ethylenglykol, 1,6-Hexandiol, 2,2-Dimethyl-1,3-propandiol (NPG), 1,4-Butandiol, 1,3-Propandiol, 1,2-Propandiol, Propan-1,2,3-triol (Glycerin), 2-Methyl-1,3-propandiol (MPD) und Cyclohexandimethanol; mit (2) einer Carbonsäure, ausgewählt aus der Gruppe bestehend aus 1,6-Hexandiocsäure (Adipinsäure), 1,12-Dodecandiocsäure (DDDA), Sebacinsäure, Azelainsäure, Cyclohexandiocsäure (CHDA), 1,2-Benzoldicarbonsäure (Phthalsäureanhydrid), 1,3-Benzoldicarbonsäure (Isophthalsäure), 1,3-Benzoldicarbonsäure (Terephthalsäure) und 1,4-Butandiocsäure (Bernsteinsäure) ist.

11. Extrusionsbeschichtetes Substrat nach Anspruch 1, wobei die Extrusionsbeschichtung eine Schmelzflussrate von etwa 3-10 g/10 min bei 190°C/2,16 kg aufweist, bestimmt gemäß ASTM D1238-13.

12. Extrusionsbeschichtetes Substrat nach Anspruch 1, wobei das extrusionsbeschichtete Substrat zu einem Becher, einem Teller, einem Strohhalm oder einem Lebensmittelbehälter geformt ist.

13. Extrusionsbeschichtetes Substrat nach Anspruch 1, wobei die Extrusionsbeschichtung einen Cobb-Wasserabsorptionswert, gemessen gemäß TAPPI-Standard T441, von weniger als 30 Gramm pro Quadratmeter aufweist.

14. Extrusionsbeschichtetes Substrat nach Anspruch 1, wobei die Extrusionsbeschichtung einen Kit-Test-Fettbeständigkeitswert, gemessen gemäß TAPPI-Standard T559, von mehr als 5 aufweist.

15. Extrusionsbeschichtetes Substrat nach Anspruch 1, wobei die Beschichtung einen Dyne-Wert von mehr als 38 aufweist, gemessen gemäß ASTM D2578-04a.

## Revendications

1. Substrat couché par extrusion compostable à la maison et/ou biodégradable en milieu marin comprenant :
un substrat en carton présentant une première face ; et
une couche d'un revêtement d'extrusion appliquée sur au moins une partie de la première face, dans lequel le revêtement d'extrusion comprend
d'environ 30 à environ 99,5 pour cent en poids d'au moins un poly(hydroxyalcanoate), et
d'environ 5 pour cent en poids à environ 69,5 pour cent en poids d'au moins un polymère compostable sélectionné dans le groupe consistant en l'acide polylactique, la poly(caprolactone), le poly(éthylène-sébécate), le poly(butylène succinate), le poly(butylène succinate-co-adipate), le poly(butylène adipate téréphtalate) et des mélanges de ceux-ci ;
dans lequel le revêtement d'extrusion comprend en outre d'environ 0,05 pour cent en poids à environ 10 % d'au moins un modificateur de rhéologie sélectionné dans le groupe consistant en des homopolymères ou des copolymères d'acétate de vinyle, des peroxydes, des époxydes, des isocyanates, des carbodiimides et des mélanges de ceux-ci ;
dans lequel le substrat couché par extrusion est compostable à la maison, tel que déterminé selon la norme ASTM D6868, et/ou le substrat couché par extrusion est biodégradable en milieu marin, tel que déterminé selon la norme ASTM D6691-17.

2. Substrat couché par extrusion selon la revendication 1, dans lequel le revêtement d'extrusion comprend d'environ 50 à environ 69,5 pour cent en poids de l'au moins un poly(hydroxyalcanoate).

3. Substrat couché par extrusion selon la revendication 1, dans lequel l'au moins un poly(hydroxyalcanoate) comprend du poly-3-hydroxybutyrate-co-3-hydroxyhexanoate ('P(3HB-co-3HHx) »).

4. Substrat couché par extrusion selon la revendication 3, dans lequel le P(3HB-co-3HHx) comprend de préférence d'environ 93 à environ 98 pour cent en mole d'hydroxybutyrate et d'environ 2 à environ 7 pour cent en mole d'hydroxyhexanoate.

5. Substrat couché par extrusion selon la revendication 1, dans lequel le revêtement d'extrusion comprend d'environ 1 à environ 25 pour cent en poids d'au moins un polyhydroxyalcanoate comprenant d'environ 25 à environ 50 pour cent en mole d'hydroxyvalérate, d'hydroxyhexanoate, d'hydroxyoctanoate et/ou d'hydroxydécanoate.

6. Substrat couché par extrusion selon la revendication 1, dans lequel l'au moins un poly(hydroxyalcanoate) comprend un terpolymère composé d'environ 75 à 99,9 pour cent en mole de résidus de monomères de 3-hydroxybutyrate, d'environ 0,1 à environ 25 pour cent en mole de résidus de monomères de 3-hydroxyhexanoate, et d'environ 0,1 à environ 25 pour cent en mole de résidus de monomères d'un troisième 3-hydroxyalcanoate présentant de 5 à 12 atomes de carbone.

7. Substrat couché par extrusion selon la revendication 1, dans lequel le revêtement d'extrusion comprend d'environ 30,5 pour cent en poids à environ 49,5 pour cent en poids d'au moins un polymère compostable sélectionné dans le groupe consistant en l'acide polylactique, la poly(caprolactone), le poly(éthylène-sébécate), le poly(butylène succinate), le poly(butylène succinate-co-adipate), le poly(butylène adipate téréphtalate), le poly(acétate de vinyle) et des mélanges de ceux-ci.

8. Substrat couché par extrusion selon la revendication 1, dans lequel le revêtement d'extrusion comprend en outre d'environ 0,1 pour cent en poids à environ 10 pour cent en poids d'au moins un agent de nucléation du groupe consistant en le pentaérythritol, le nitrure de bore, le poly(hydroxybutyrate), l'inositol, les argiles, le dipentaérythritol, le sorbitol et des mélanges de ceux-ci.

9. Substrat couché par extrusion selon la revendication 1, dans lequel le revêtement d'extrusion comprend en outre d'environ 1 pour cent en poids à environ 15 pour cent en poids d'au moins une charge sélectionnée dans le groupe consistant en l'aragonite, les argiles, le carbonate de calcium, la cellulose, la nano-cellulose, le talc, la kaolinite, la montmorillonite, la bentonite, le silice, la chitine, les amidons, la terre de diatomée, la dioxyde de titane, une nano argile, le mica et des mélanges de ceux-ci.

10. Substrat couché par extrusion selon la revendication 1, dans lequel le revêtement d'extrusion comprend en outre d'environ 0,1 pour cent en poids à environ 50 pour cent en poids d'au moins un modificateur de résistance aux chocs qui est le produit de réaction de polycondensation de : (1) un glycol sélectionné dans le groupe consistant en le 2-(hydroxyméthyl)-2-éthylpropane-1,3-diol (TMP), le diéthylène glycol, l'éthylène glycol, le 1,6-hexanediol, le 2,2-diméthyl-1,3-propanediol (NPG), le 1,4-butanediol, le 1,3-propanediol, le 1,2-propanediol, le propane-1,2,3-triol (glycérine), le 2-méthyl-1,3-propanediol (MPD) et le cyclohexanediméthanol ; avec (2) un acide carboxylique sélectionné dans le groupe consistant en l'acide 1,6-hexanedioïque (acide adipique), l'acide 1,12-dodécanedioïque (DDDA), l'acide sébacique, l'acide azélaïque, l'acide cyclohexanedioïque (CHDA), l'acide 1,2-benzènedicarboxylique (anhydride phtalique), l'acide 1,3-benzènedicarboxylique (acide isophtalique), l'acide 1,3-benzène dicarboxylique (acide téréphtalique) et l'acide 1,4-butanedioïque (acide succinique).

11. Substrat couché par extrusion selon la revendication 1, dans lequel le revêtement d'extrusion présente un indice de fluidité à chaud d'environ 3-10 g/10 minutes à 190 °C/2,16 kg, tel que déterminé par la norme ASTM D1238-13.

12. Substrat couché par extrusion selon la revendication 1, dans lequel le substrat couché par extrusion est formé en un gobelet, une assiette, une paille ou un récipient alimentaire.

13. Substrat couché par extrusion selon la revendication 1, dans lequel le revêtement d'extrusion présente une valeur d'absorption d'eau Cobb, mesurée selon la norme TAPPI T441, inférieure à 30 grammes par mètre carré.

14. Substrat couché par extrusion selon la revendication 1, dans lequel le revêtement d'extrusion présente une valeur de résistance aux matières grasses selon le kit d'essai, mesurée selon la norme TAPPI T559, supérieure à 5.

15. Substrat couché par extrusion selon la revendication 1, dans lequel le revêtement présente une valeur Dyne supérieure à 38, mesurée selon la norme ASTM D2574-04a.
